(19) Europäisches Patentamt / European Patent Office / Office européen des brevets

(11) **EP 4 390 876 A1**

(12) **DEMANDE DE BREVET EUROPEEN**

(43) Date de publication:
   **26.06.2024   Bulletin 2024/26**

(21) Numéro de dépôt: **23218206.3**

(22) Date de dépôt: **19.12.2023**

(51) Classification Internationale des Brevets (IPC):
   **G06V 20/52** (2022.01)       **G06F 18/232** (2023.01)
   **G06F 18/231** (2023.01)       **G06F 18/24** (2023.01)

(52) Classification Coopérative des Brevets (CPC):
   **G06V 20/52; G06F 18/231; G06F 18/232; G06F 18/24765**

(84) Etats contractants désignés:
   **AL AT BE BG CH CY CZ DE DK EE ES FI FR GB GR HR HU IE IS IT LI LT LU LV MC ME MK MT NL NO PL PT RO RS SE SI SK SM TR**
   Etats d'extension désignés:
   **BA**
   Etats de validation désignés:
   **KH MA MD TN**

(30) Priorité: **21.12.2022   FR 2214033**

(71) Demandeur: **COMMISSARIAT À L'ÉNERGIE ATOMIQUE ET AUX ÉNERGIES ALTERNATIVES 75015 Paris (FR)**

(72) Inventeurs:
   • **LAPOUGE, Guillaume**
     **91191 GIF-SUR-YVETTE CEDEX (FR)**
   • **LUVISON, Bertrand**
     **91191 GIF-SUR-YVETTE CEDEX (FR)**

(74) Mandataire: **Atout PI Laplace Immeuble Up On 25 Boulevard Romain Rolland CS 40072 75685 Paris Cedex 14 (FR)**

(54) **PROCÉDÉ D'ANNOTATION DE PISTES DE SUIVI D'INDIVIDUS DANS UNE SÉQUENCE D'IMAGES**

(57)      Procédé d'annotation de pistes acquises à partir d'une caméra, comprenant les étapes de :
- Recevoir (101) au moins une séquence d'images acquise à l'aide d'au moins une caméra,
- Extraire (102) de l'au moins une séquence d'images, au moins une piste de suivi d'un individu inconnu,
- Calculer (103), pour chaque piste de suivi d'individus, une signature de l'individu,
- Exécuter plusieurs itérations d'un algorithme de partitionnement (104) sous contraintes auxdites pistes de suivi en fonction de leur signature, l'algorithme étant configuré pour partitionner les pistes de suivi dans au moins un groupe d'individus recommandés ou dans un groupe d'individus sans recommandation,
- A chaque nouvelle itération, fournir à l'algorithme de partitionnement (104) au moins une nouvelle contrainte et exécuter une étape de validation (105) de l'identité des individus classés dans le groupe d'individus recommandés
- Si l'identité de l'individu est validée, annoter l'individu avec cette identité et le transférer dans un groupe d'individus annotés

FIG.1a

EP 4 390 876 A1

**Description**

L'invention concerne le domaine de l'annotation de pistes de suivi d'individus, par exemple d'animaux, dans une séquence d'images acquises par une ou plusieurs caméras. L'invention porte sur un procédé d'annotation impliquant un algorithme de partitionnement sous contraintes.

Un problème à résoudre dans le domaine de l'annotation d'individus dans des séquences d'images concerne la prise en compte de contraintes extérieures, par exemple des contraintes utilisateur ou des contraintes fournies par d'autres capteurs afin d'améliorer la précision des annotations automatiques c'est-à-dire diminuer le pourcentage d'erreurs dans les annotations générées automatiquement.

De façon générale, l'invention vise à proposer un procédé d'annotation le plus fiable possible.

Les méthodes de l'art antérieur sont le plus souvent basées sur des techniques de classification ou de partitionnement qui ne permettent pas de prendre en compte tout type de contraintes et qui fonctionnent en une seule itération. Par ailleurs, les méthodes connues ne prennent pas toujours en compte des acquisitions multi-caméras.

L'invention propose une nouvelle méthode d'annotation semi-automatique d'individus au sein d'une séquence d'images capturée par une ou plusieurs caméras. La méthode met en oeuvre une technique itérative de partitionnement sous contraintes qui permet d'améliorer la précision des annotations.

L'invention a pour objet un procédé, mis en oeuvre par ordinateur, d'annotation de pistes acquises à partir d'au moins une caméra, le procédé comprenant les étapes de :

- Recevoir au moins une séquence d'images acquise à l'aide d'au moins une caméra,

- Extraire de l'au moins une séquence d'images, au moins une piste de suivi d'un individu inconnu,

- Calculer, pour chaque piste de suivi d'individus, une signature de l'individu,

- Exécuter plusieurs itérations d'un algorithme de partitionnement sous contraintes auxdites pistes de suivi en fonction de leur signature, l'algorithme étant configuré pour partitionner les pistes de suivi dans au moins un groupe d'individus re

- commandés ou dans un groupe d'in

- dividus sans recommandation,

- A chaque nouvelle itération, fournir à l'algorithme de partitionnement au moins une nouvelle contrainte et exécuter une étape de validation de l'identité des individus classés dans le groupe d'individus recommandés,

- Si l'identité de l'individu est validée, annoter l'individu avec cette identité et le transférer dans un groupe d'individus annotés.

Dans une variante de réalisation, le procédé selon l'invention comprend en outre une étape de recevoir une base de données constituée de pistes de suivi d'individus annotés, le calcul de signature d'individu et l'algorithme de partitionnement étant réalisés pour les pistes de suivi d'individu annotés et inconnus, chaque groupe d'individus recommandés comprenant un individu annoté.

Selon un aspect particulier de l'invention, l'étape de validation consiste à valider l'identité des individus classés dans le groupe d'individus recommandés comme correspondant à l'identité de l'individu annoté.

Selon un aspect particulier de l'invention, l'étape de validation de l'identité des individus classés dans le groupe d'individus recommandés est réalisée au moyen d'une interaction utilisateur ou au moyen d'une règle de comparaison entre les signatures respectives de l'individu dont l'identité doit être validée et de l'individu annoté.

Dans une variante de réalisation, le procédé selon l'invention comprend une étape de compléter la base de données avec les pistes de suivi du groupe d'individus annotés.

Selon un aspect particulier de l'invention, l'au moins une séquence d'images est acquise au moyen de plusieurs caméras à champs joints ou à champs disjoints.

Selon un aspect particulier de l'invention, les pistes de suivi d'individu sont générées en 2D ou en 3D.

Selon un aspect particulier de l'invention, l'étape de calculer une signature pour chaque piste de suivi d'individu est réalisée au moyen d'un réseau neuronal de ré-identification entraîné pour générer des signatures semblables pour des individus identiques.

Dans une variante de réalisation, le procédé selon l'invention comprend en outre une étape de ré-entraînement du réseau neuronal de ré-identification à partir de la base de données de pistes de suivi d'individus obtenue à l'issue de plusieurs itérations du procédé d'annotation.

Dans une variante de réalisation, le procédé selon l'invention comprend en outre une étape de réception de contraintes fournies par au moins un capteur et associées aux pistes de suivi d'individus parmi lesquelles : une contrainte de localisation temporelle et/ou spatiale d'un individu, une contrainte relative à l'identité de l'individu, une contrainte de non ubiquité d'un individu, une contrainte de non téléportation d'un individu, lesdites contraintes étant fournies en entrée de l'algorithme de partitionnement sous contraintes.

Dans une variante de réalisation, le procédé selon l'invention comprend en outre, à chaque itération, une étape de réception de contraintes utilisateurs associées aux pistes de suivi d'individus, relatives à l'identité d'un individu, lesdites contraintes étant fournies en entrée de l'algorithme de partitionnement sous contraintes.

Selon un aspect particulier de l'invention, les contraintes de l'algorithme de partitionnement sont prises parmi une contrainte d'association entre plusieurs pistes de suivi d'individus ou une contrainte de non association entre plusieurs pistes de suivi d'individus.

Selon un aspect particulier de l'invention, l'ensemble des pistes de suivi qui partagent une contrainte d'association sont regroupées dans le même groupe d'individus recommandés.

Selon un aspect particulier de l'invention, deux pistes de suivi qui partagent une contrainte de non association sont placées dans deux groupes d'individus différents.

L'invention a aussi pour objet un programme d'ordinateur comportant des instructions pour l'exécution du procédé selon l'invention, lorsque le programme est exécuté par un processeur.

L'invention a aussi pour objet un support d'enregistrement lisible par un processeur sur lequel est enregistré un programme comportant des instructions pour l'exécution du procédé selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1a] représente un organigramme détaillant les étapes de mise en oeuvre d'une méthode d'annotation de pistes de suivi d'individus selon un premier mode de réalisation de l'invention,

[Fig. 1b] représente un organigramme détaillant les étapes de mise en oeuvre d'une méthode d'annotation de pistes de suivi d'individus selon un second mode de réalisation de l'invention,

[Fig. 2] représente un exemple d'une piste de suivi d'un animal,

[Fig. 3] représente un organigramme détaillant les phases de mise en oeuvre d'une étape de partitionnement de la méthode d'annotation de pistes, selon un mode de réalisation de l'invention,

[Fig. 4] représente une interface graphique illustrant un exemple de résultats intermédiaires obtenus par la méthode selon l'invention,

[Fig. 5a] représente un exemple de mise en oeuvre de la méthode de partitionnement selon l'invention,

[Fig. 5b] représente un exemple de mise en oeuvre de la méthode de partitionnement selon l'invention,

[Fig. 5c] représente un exemple de mise en oeuvre de la méthode de partitionnement selon l'invention,

[Fig. 5d] représente un exemple de mise en oeuvre de la méthode de partitionnement selon l'invention,

[Fig. 5e] représente un exemple de mise en oeuvre de la méthode de partitionnement selon l'invention,

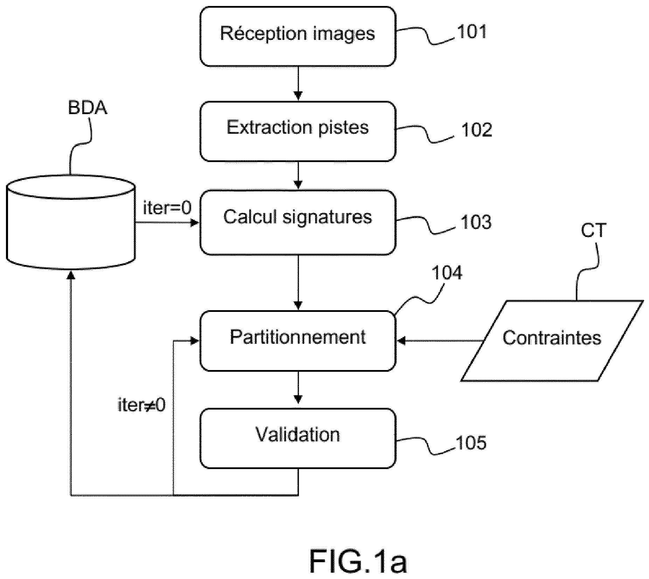

La figure 1a schématise, sur un organigramme, les étapes principales de mise en oeuvre d'une d'annotation de pistes de suivi d'individus selon un mode de réalisation de l'invention.

La méthode vise à annoter des pistes de suivi d'individus, par exemple des animaux, avec une identité. Autrement dit, un objectif de l'invention est d'identifier et annoter en conséquence chaque individu dans une séquence vidéo donnée. Une application de l'invention consiste, par exemple, à identifier chaque individu d'un troupeau d'animaux.

La méthode débute à l'étape 101 avec la réception d'une ou plusieurs séquences d'images acquises par une ou plusieurs caméras. Lorsque plusieurs caméras sont utilisées, elles peuvent être à champs joints ou à champs disjoints. Le suivi peut être réalisé en 2D ou en 3D. A cet effet, tout dispositif d'acquisition de séquences vidéo permettant de fournir un suivi en 2D ou 3D est compatible avec l'invention.

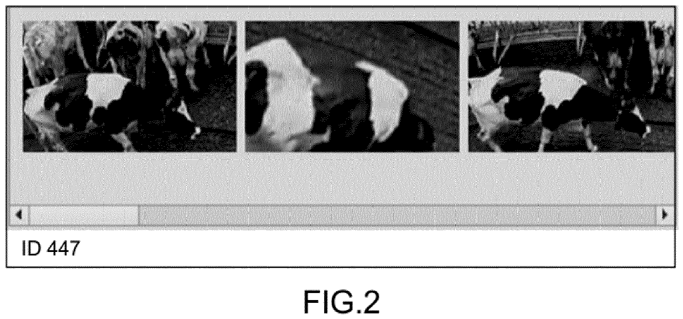

A l'étape 102, on réalise ensuite une extraction de pistes de suivi d'individus à partir des séquences d'images capturées. Un exemple de piste de suivi d'un individu est représenté à la figure 2. Une piste de suivi est constituée d'informations consécutives de position et de temps ainsi que de plusieurs imagettes centrées sur l'individu à suivre. Chaque imagette est associée à un instant temporel. L'étape 102 peut être réalisée au moyen de tout algorithme de génération de pistes de suivi, par exemple un algorithme de suivi de type « Multi Object Tracking » ou MOT en anglais tel que décrit par exemple dans les références [1],[2] ou [3].

Dans le cas d'un suivi 3D, la génération de pistes de suivi peut s'appuyer, par exemple, sur une première étape de génération de pistes 2D dans des caméras calibrées, puis une seconde étape d'estimation en 3D à partir d'une hypothèse de hauteur sur l'observation 2D. Dans le cas de caméras à champs joints, la mise en correspondance de deux projections 3D provenant de deux caméras différentes observant la même région peut être réalisée par l'algorithme Hongrois par exemple.

L'étape 102 peut être réalisée avec un suivi 2D ou 3D et pour des séquences capturées par des caméras à champs joints ou disjoints.

Un objectif de l'étape 102 est de fournir en sortie autant de pistes de suivi que d'individus présents dans la scène filmée. Chaque piste de suivi étant associée à un seul individu. Chaque piste de suivi est une séquence temporelle localisée qui identifie la trajectoire d'un individu dans le temps et l'espace. Plusieurs pistes de suivi peuvent être associées au même individu, par exemple, dans des intervalles temporels différents.

Un objectif de l'invention est d'annoter chaque piste de suivi en lui attribuant une identité, par exemple un numéro.

Dans un mode de réalisation de l'invention, la méthode reçoit aussi en entrée une base de données annotées BDA constituée de pistes de suivi d'individus déjà annotées. L'annotation des données de la base BDA peut être réalisée manuellement, par un utilisateur, ou de façon automatique en utilisant la méthode selon l'invention. Plus généralement, un objectif de l'invention est aussi de compléter la base de données BDA avec de nouvelles pistes de suivi annotées. Une piste de suivi annotée est une piste du type décrit à la figure 2 à laquelle on associe une identité, par exemple ID 447 sur l'exemple de la figure 2.

Optionnellement, l'invention peut aussi être appliquée sans se baser sur une base de données annotées BDA, dans ce cas, toutes les identités des individus sont inconnues initialement.

A l'étape 103, on calcule ensuite une signature visuelle de ré-identification pour chaque piste de suivi, issue de l'étape d'extraction de pistes 102 mais aussi pour chaque piste de suivi de la base de données BDA lorsque celle-ci est disponible. Avantageusement, les signatures pour les pistes de suivi ou imagettes stockées dans la base de données BDA ne sont calculées qu'à la première itération (iter=0) de la méthode puis sont sauvegardées pour les itérations suivantes.

Une signature est calculée pour chaque piste afin d'évaluer la similarité entre les différentes pistes. L'étape de calcul de signatures 103 est, par exemple, mise en oeuvre au moyen d'un algorithme de ré-identification tel que décrit par exemple dans l'une des références [4] ou [5].

L'algorithme de ré-identification peut mettre en oeuvre un modèle d'intelligence artificielle entraîné pour calculer une signature caractéristique de l'aspect visuel de chaque imagette de la piste de suivi. Un tel algorithme est entraîné pour calculer des signatures sensiblement identiques pour deux imagettes représentant le même individu et à l'inverse des signatures différentes pour deux imagettes représentant des individus différents. Par exemple, la signature est calculée à partir de points d'intérêts caractéristiques de l'aspect visuel de l'individu.

Le modèle d'intelligence artificielle est, par exemple, basé sur un réseau de neurones convolutifs ou un réseau de neurones de type « transformers ».

Le réseau de neurones prend en entrée les images de la piste de suivi et les encodent dans un espace de caractéristiques de dimension plus faible de sorte à générer des caractéristiques, ou signatures, qui encodent l'information visuelle pertinente pour pouvoir comparer différentes identités entre elles.

Le réseau de neurones est, par exemple, entraîné de façon supervisée à partir d'une base de données d'entraînement contenant, pour chaque identité, plusieurs imagettes différentes représentant l'individu dans des conditions variées.

La base d'entraînement est par exemple, une base d'images d'entraînement publique.

Le réseau de neurones est entraîné de manière à minimiser une fonction de coût prédéterminée. Les paramètres du réseau, comprenant les poids synaptiques de chaque couche du réseau, sont appris au moyen d'un algorithme de rétro-propagation du gradient consistant à rétro-propager l'erreur obtenue à partir de la fonction de coût de la sortie du réseau vers l'entrée en mettant à jour les paramètres de chaque couche au fur et à mesure.

La fonction de coût utilisée est par exemple égale à

$$L_{Tri} = \max(d_p - d_n + \alpha, 0)$$

$d_p$ correspond à une distance entre les signatures calculées pour une image de référence et une autre image correspondant à la même identité que l'image de référence. $d_n$ correspond à une distance entre les signatures calculées pour une image de référence et une autre image correspondant à une identité différente de celle de l'image de référence.

α est un paramètre correspondant à une marge inter identité.

La minimisation de la fonction de coût $L_{Tri}$ permet d'assurer qu'une distance intra identité est plus grande qu'une distance inter identités.

Une autre fonction de coût peut être utilisée seule ou en complément de la précédente et correspond à une fonction de classification. Les signatures de ré-identification sont fournies à un réseau de neurones de classification dont la taille en sortie est égale aux nombre d'identités N contenues dans la base d'apprentissage.

La fonction de coût à minimiser est donnée par :

$$L_{ID} \;=\; \sum_{i=1}^{N} -q_i \, log(p_i)$$

Avec,

$$q_i = 0 \; si \; y \neq i$$

$$q_i = 1 \; si \; y = i$$

Où $p_i$ est le logit correspondant à la prédiction d'appartenance d'une identité à la classe i, y est la véritable identité de l'individu considéré.

La signature d'une piste est par exemple calculée comme étant la moyenne des signatures calculées pour chaque image de la piste.

La signature d'une identité présente dans la base de données annotées est par exemple égale à la moyenne des signatures calculées pour chaque image représentant cette identité.

A l'étape 104, on applique ensuite un algorithme de partitionnement à l'ensemble des signatures calculées à l'étape 103. L'algorithme de partitionnement est configuré pour partitionner les signatures en différents groupes, correspondant potentiellement à des identités différentes. Un objectif de l'étape de partitionnement 104 est que toutes les signatures classées dans un même groupe sont censées correspondre à la même identité. Cependant, l'algorithme de partitionnement 104 peut présenter un certain pourcentage d'erreurs de partitionnement, c'est pour cela qu'il fonctionne sous contraintes CT, de façon itérative et est associé à une étape de validation 105 des identités estimées.

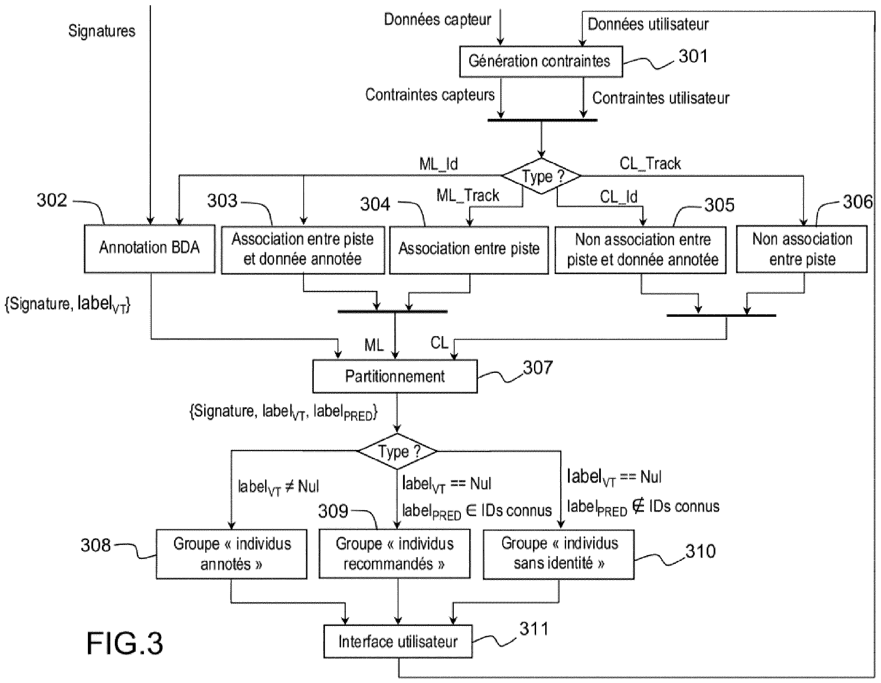

La figure 3 représente, sur un organigramme, les étapes de mise en oeuvre de l'algorithme de partitionnement de l'étape 104.

L'algorithme reçoit en entrée les signatures calculées à la fois pour les pistes annotées et les pistes non annotées.

Il reçoit en outre des données issues de capteurs et permettant de fournir des informations de localisation spatiales et/ou temporelles des individus ainsi que des informations relatives à l'identité des individus. Les informations peuvent être absolues ou relatives (comparaison entre identités).

Par exemple, les données fournies par des capteurs sont prises parmi la liste non exhaustive suivante :

- Une information de localisation ponctuelle d'un individu fournie par un capteur RFID ou un QR code qui est associée à une identité absolue,

- Une information de localisation de longue durée fournie par un capteur de positionnement par satellite ou par un dispositif de localisation « Ultra Wide Band » et associée à une identité absolue. L'information de localisation est continue et associée à un couple (temps, position).

L'algorithme peut recevoir également des données fournies par un utilisateur relatives à l'identité absolue ou relative des individus. Ces données utilisateurs sont prises parmi la liste non exhaustive suivante :

- Une information d'identification absolue « positive » générée par un utilisateur qui fait une association entre une piste de suivi (ou une image de cette piste) et une identité absolue et indique qu'il s'agit du même individu,

- Une information d'identification absolue « négative» générée par un utilisateur qui fait une association entre une piste de suivi (ou une image dans cette piste) et une identité absolue en indiquant qu'il s'agit d'un individu différent,

- Une information d'identification relative « positive » générée par un utilisateur qui fait une association entre plusieurs pistes et indique qu'il s'agit du même individu, sans fournir d'identité absolue,

- Une information d'identification relative « négative» générée par un utilisateur qui fait une association entre plusieurs pistes et indique qu'il s'agit d'un individu différent, sans fournir d'identité absolue.

De manière générale, les informations sont, par exemple, fournies par un utilisateur au moyen d'une interaction via une interface graphique homme machine.

L'ensemble des données issues de capteurs ou d'utilisateurs sont fournies en entrée d'une étape de génération de contraintes 301 qui délivre en sortie un ensemble de contraintes à prendre en compte par l'algorithme de partitionnement.

L'étape 301 a pour but de transformer les informations reçues en entrée en contraintes à prendre en compte pour réaliser le partitionnement.

Les contraintes générées sont, par exemple, prises parmi la liste non exhaustive suivante :

- Une contrainte d'association entre une piste et une identité ML_Id : cette contrainte est par exemple générée lorsqu'une information d'identification est disponible pour une piste (fournie par un dispositif d'identification ou de localisation ou par un utilisateur),

- Une contrainte d'association entre deux pistes ML_track : cette contrainte est par exemple générée lorsqu'un utilisateur indique que deux pistes doivent correspondre à la même identité,

- Une contrainte de non association entre une piste et une identité CL_Id : cette contrainte est par exemple générée à partir d'informations utilisateurs ou capteurs,

- Une contrainte de non association entre deux pistes CL_track : cette contrainte est par exemple générée à partir d'indications spatio-temporelles relatives à des contraintes de non ubiquité ou de non téléportation.

En particulier, certaines contraintes sur l'évolution spatio-temporelle d'un individu dans la scène peuvent être prises en compte. Par exemple, une première contrainte de non ubiquité peut être prise en compte afin d'éviter l'attribution de la même identité à deux individus présents en même temps dans deux images différentes. Une seconde contrainte de non téléportation ou non déplacement à grande vitesse consiste à vérifier une certaine cohérence dans le déplacement spatio-temporel d'un individu.

Par exemple, une contrainte de non ubiquité peut être calculée de la façon suivante.

Si on note $t_{s1}, t_{e1}$ et $t_{s2}, t_{e2}$ les instants de début et de fin de deux pistes de suivi 1 et 2. Une contrainte de non ubiquité à respecter est donnée par la relation suivante : $[t_{s1}, t_{e1}] \cap [t_{s2}, t_{e2}] = \varnothing$. Autrement dit les deux pistes de suivi 1 et 2 ne peuvent pas être associées à la même identité si cette relation n'est pas respectée. Ainsi, si cette condition n'est pas vérifiée, une contrainte de non association est générée pour ces deux pistes.

De la même façon, pour une piste 1 antérieure à une piste 2, si on note $pos_{s1}, pos_{e1}$ les positions respectives de début et de fin d'un individu dans une piste de suivi 1 et $pos_{s2}, pos_{e2}$ les positions respectives de début et de fin d'un individu dans une piste de suivi 2, une contrainte de non téléportation ou de non déplacement à haute vitesse $v_{max}$ à respecter peut être donnée par la relation suivante :

$$(||pos_{s2} - pos_{e1}||_2)/(t_{s2} - t_{e1}) < v_{max}$$

Si cette condition n'est pas vérifiée, une contrainte de non association est générée pour les deux pistes 1,2.

En plus des contraintes précitées, l'utilisateur peut décider d'attribuer une nouvelle identité, jamais vue auparavant, à une piste. Cela signifie la découverte d'une identité auparavant non déclarée.

Puis ces contraintes sont traduites en contraintes entre pistes.

Autrement dit, toute piste ayant une contrainte d'association avec une identité i E [1 ; N_k] est liée aux pistes annotées avec cette identité i par une contrainte d'association. N_k étant le nombre d'identités annotées à l'itération de partitionnement k (iter=k).

Toute piste ayant une contrainte d'absence d'association avec une identité i E [1 ; N_k] est liée aux pistes annotées avec cette identité i par une contrainte de non association.

Ces associations entre pistes sont réalisées par les étapes 303,304,305,306.

L'étape 302 vise à associer un label de vérité terrain $label_{vt}$ à toutes les signatures calculées pour les identités de la base de données annotées BDA.

A l'étape 307, l'algorithme de partitionnement est exécuté avec, comme entrées, l'ensemble des signatures et contraintes à respecter.

L'algorithme de partitionnement utilisé est par exemple l'algorithme C-DBSCAN décrit dans la référence [6] ou un algorithme de type partitionnement hiérarchique sous contraintes décrit dans [7].

L'algorithme de partitionnement 307 est configuré pour classer les pistes en deux types de groupes.

Les pistes de suivi qui sont classées dans un même groupe qu'une image de la base BDA associée à une identité connue sont classées dans un groupe 309 d'individus recommandés associé à cette identité. Elles correspondent à des individus inconnus mais qui ressemblent à un individu connu du fait de la similarité de leurs signatures.

Les pistes de suivi qui appartiennent à un groupe qui ne contient aucune signature associée à une identité connue (provenant de la base BDA) sont classées dans un groupe d'individus sans identité 310. Il s'agit d'individus inconnus qui n'ont pu être assignés à une identité connue c'est-à-dire présente dans la base BDA.

Dans une variante de réalisation, si aucune base de données annotée n'est disponible initialement, à la première itération de la méthode (iter=0), tous les individus sont classés dans le groupe sans identité 310.

Une étape supplémentaire de validation de l'identité des individus du groupe 309 d'individus recommandés est ensuite réalisée afin de transférer ou non ces individus dans le groupe 308 des individus annotés en validant leur identité comme annotation définitive.

Le groupe 308 des individus annotés correspond sur la figure 3 aux individus annotés à l'étape 302, c'est-à-dire ceux qui possèdent une identité correspondant à une vérité terrain $label_{vt}$. Les individus du groupe d'individus recommandés 309 n'ont pas encore d'identité associée à une vérité terrain (c'est-à-dire validée en tant que telle) mais ont une identité estimée $label_{pred}$.

Dans un mode de réalisation de l'invention, cette étape de validation est intégrée à l'algorithme de partitionnement 307 et consiste par exemple à valider l'identité d'un individu recommandé lorsque la différence entre sa signature et la signature de l'individu annoté correspondant à l'identité recommandée est inférieure à un seuil prédéterminé.

Dans un autre mode de réalisation de l'invention, l'étape de validation est réalisée via une interaction avec un utilisateur (étape 311). Dans ce mode, les pistes de suivi du groupe d'individus recommandés sont présentées à l'utilisateur via une interface graphique. Elles sont affichées à côté des images correspondantes de même identité de la base de données BDA puis l'utilisateur valide ou non, par évaluation visuelle, si l'identité estimée correspond bien ou non à l'identité réelle. Si c'est le cas, les pistes de suivi sont définitivement annotées avec cette identité et passent dans le groupe d'individus annotés 308. Dans ce cas, les pistes sont ensuite sauvegardées dans la base de données d'annotations BDA afin de l'enrichir.

La méthode fonctionne selon un processus itératif. A chaque itération i, un utilisateur peut à la fois réaliser l'étape de validation des identités des individus recommandés mais aussi fournir de nouvelles contraintes à l'algorithme de partitionnement, par exemple des contraintes d'association ou de non association entre différentes pistes de suivi. Dans le cas où une identité estimée d'un individu n'est pas validée par l'utilisateur, cette information est fournie à l'algorithme de partitionnement sous forme d'une contrainte de non association entre la piste de suivi et l'identité estimée pour la prochaine itération.

Ce fonctionnement itératif est représenté schématiquement sur la figure 1a par une flèche qui reboucle de l'étape de validation 105 vers l'étape de partitionnement 104.

Dans le cas où aucune base de données annotées BDA n'est disponible initialement, dès la 2ème itération de la méthode, les pistes de suivi d'individus du groupe d'individus annotés 308 (c'est-à-dire validées par l'utilisateur) peuvent être utilisées pour créer une base de données annotées BDA qui est prise en compte pour les itérations suivantes. La base de données BDA est ensuite enrichie à chaque itération. Ce fonctionnement itératif est représenté sur la figure 1a par une flèche qui va de l'étape de validation 105 vers la base de données BDA.

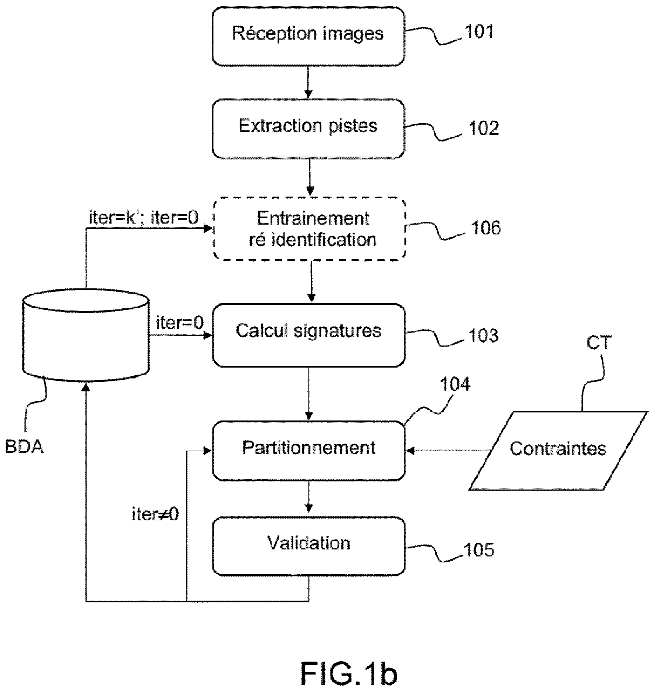

Dans un autre mode de réalisation de l'invention représenté à la figure 1b, l'algorithme de ré-identification utilisé pour réaliser le calcul des signatures 103 est ré-entraîné à l'étape 106 sur les données mises à jour dans la base de données BDA après k' itérations du mécanisme de partitionnement (iter=k' itérations). Le fait de ré-entraîner le modèle de ré-identification permet de calculer des signatures qui sont plus adaptées au partitionnement des données dans un espace donné lié aux types d'individus à annoter. Dans ce mode de réalisation, une fois le réseau de ré-identification ré-entraîné (étape 106), on ré-exécute intégralement la méthode de partitionnement itérative selon l'invention telle que décrite à la figure 1a.

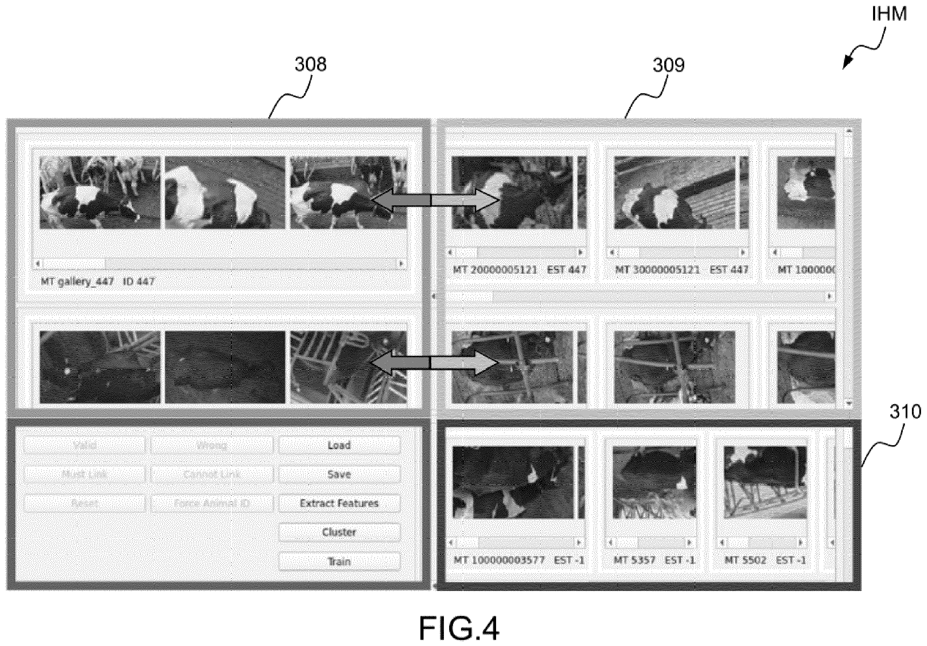

La figure 4 représente un exemple d'interface graphique homme machine IHM. Cette interface comporte une première sous-fenêtre pour visualiser le groupe d'individus annotés 308 sous forme de pistes de suivi associées à une identité ID.

Elle comporte une deuxième sous-fenêtre pour visualiser le groupe d'individus recommandés 309 avec des identités estimées EST. Les pistes de suivi d'individus du groupe 309 sont visualisées sur la même ligne que les pistes de suivi d'individus du groupe 308 correspondant aux mêmes identités. Ainsi, l'utilisateur peut plus aisément comparer les pistes deux à deux afin de valider les identités estimées.

L'interface graphique IHM comporte enfin une troisième sous-fenêtre 310 incluant les pistes de suivi du groupe d'individus sans identité 310.

A chaque itération, l'utilisateur peut également affecter une nouvelle identité ID aux pistes de suivi du groupe d'individus sans identité 310. Dans ce cas, ces pistes peuvent être transférées dans le groupe d'individus annotés 308.

Un avantage de la méthode proposée réside dans son fonctionnement itératif qui permet d'améliorer progressivement les annotations des pistes en introduisant des contraintes utilisateurs à chaque itération.

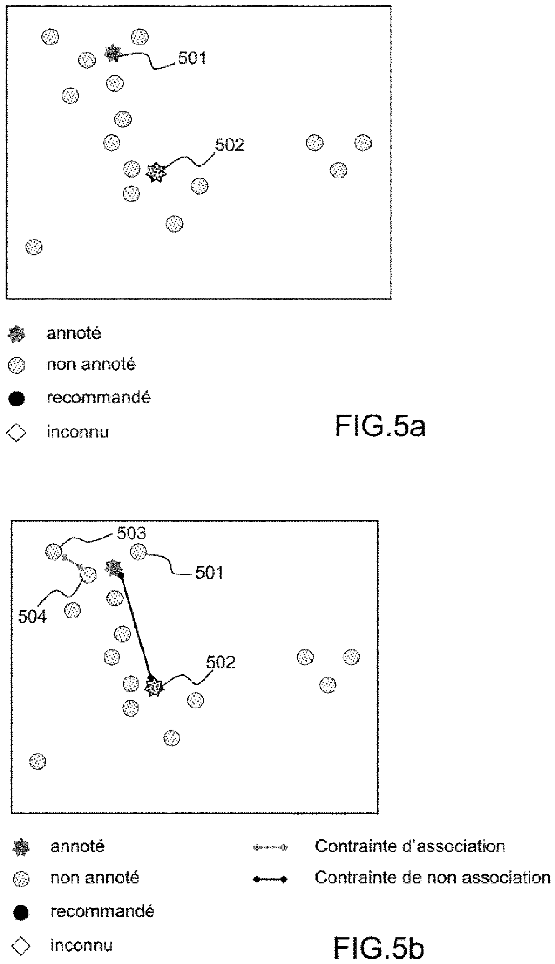

Les figures 5a à 5e illustrent le fonctionnement itératif de la méthode selon l'invention sur un exemple schématique non limitatif.

Sur la figure 5a, on a représenté schématiquement un ensemble de symboles correspondant à des pistes de suivi fournies en entrée de l'étape 307 de partitionnement de l'algorithme de la figure 3. Sur l'exemple de la figure 5a, toutes les pistes sont non annotées (issues de nouvelles acquisitions) sauf les pistes 501 et 502 qui sont déjà annotées et correspondent à deux identités différentes.

La figure 5b illustre l'application de contraintes aux différentes pistes de suivi. Dans cet exemple, les pistes 501 et 502 sont liées par une contrainte de non association puisqu'elles correspondent à deux identités différentes. Les pistes 503 et 504 sont liées par une contrainte d'association.

Les contraintes proviennent d'informations issues de capteurs ou d'information a priori.

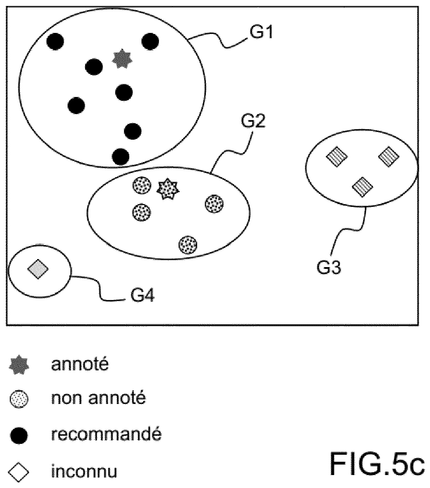

La figure 5c montre le résultat d'une première itération de partitionnement qui conduit à l'établissement de quatre groupes G1,G2,G3,G4 qui prennent en compte les contraintes précitées.

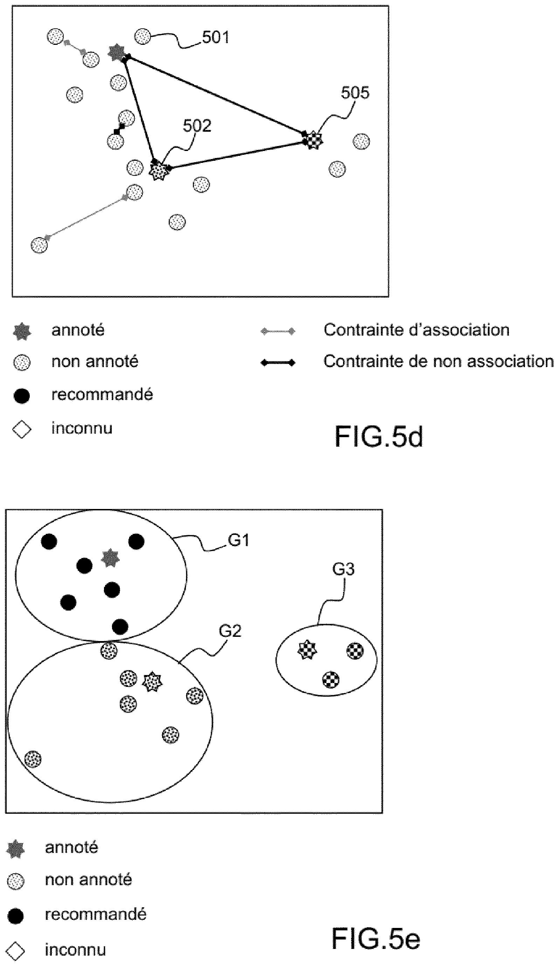

La figure 5d montre une deuxième itération de la méthode qui débute par l'introduction de nouvelles contraintes fournies par l'utilisateur. En l'occurrence, la piste 505 est identifiée par l'utilisateur qui lui attribue une nouvelle identité. Les pistes déjà annotées 501,502,505 sont contraintes par une contrainte de non association puisqu'elles correspondent à trois identités différentes. D'autres contraintes d'association et de non association sont introduites pour des paires de pistes.

La figure 5e montre le résultat de la seconde itération de partitionnement qui conduit au raffinement des groupes. Sur cet exemple, trois groupes G1,G2,G3 sont finalement constitués au lieu des quatre groupes obtenus à la première itération qui ne bénéficiait pas de toutes les contraintes fournies par l'utilisateur.

L'invention peut être mise en oeuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Références

[1]: A. Bewley, G. Zongyuan, F. Ramos, and B. Upcroft, "Simple online and realtime tracking," in IEEE international conférence on image processing (ICIP), 2016, pp. 3464-3468.

[2]: N. WOJKE, A. BEWLEY and D. PAULUS. « Simple online and realtime tracking with a deep association metric ». In : 2017 IEEE international conférence on image processing (ICIP), 2017. pp. 3645-3649.

[3]: Y. ZHANG, P.SUN, Y. JIANG et al. Bytetrack: Multi-object tracking by associating every détection box. In : European Conférence on Computer Vision. Springer, Cham, 2022. p. 1-21.

[4] H. LUO, Y. GU, LIAO, Xingyu, et al. Bag of tricks and a strong baseline for deep person re-identification. In : Proceedings of the IEEE/CVF conférence on computer vision and pattern recognition workshops. 2019. p. 0-0.

[5] Transreid HE, Shuting, LUO, Hao, WANG, Pichao, et al. Transreid: Transformer-based object re-identification. In : Proceedings of the IEEE/CVF international conférence on computer vision. 2021. p. 15013-15022.),

[6] RUIZ, Carlos, SPILIOPOULOU, Myra, et MENASALVAS, Ernestina. C-dbscan: Density-based clustering with constraints. In : International workshop on rough sets, fuzzy sets, data mining, and granular-soft computing. Springer, Berlin, Heidelberg, 2007. p. 216-223.

[7] DAVIDSON, Ian et RAVI, S. S. Agglomerative hierarchical clustering with constraints: Theoretical and empirical results. In : European Conference on Principles of Data Mining and Knowledge Discovery. Springer, Berlin, Heidelberg, 2005. p. 59-70.

**Revendications**

1. Procédé, mis en oeuvre par ordinateur, d'annotation de pistes acquises à partir d'au moins une caméra, le procédé comprenant les étapes de :

- Recevoir (101) au moins une séquence d'images acquise à l'aide d'au moins une caméra,
- Extraire (102) de l'au moins une séquence d'images, au moins une piste de suivi d'un individu inconnu,
- Calculer (103), pour chaque piste de suivi d'individus, une signature de l'individu,
- Exécuter plusieurs itérations d'un algorithme de partitionnement (104) sous contraintes (CT) auxdites pistes de suivi en fonction de leur signature, l'algorithme étant configuré pour partitionner les pistes de suivi dans au moins un groupe d'individus recommandés (309) ou dans un groupe d'individus sans recommandation (310),
- A chaque nouvelle itération, fournir à l'algorithme de partitionnement (104) au moins une nouvelle contrainte (CT) et exécuter une étape de validation (105) de l'identité des individus classés dans le groupe d'individus recommandés (309),
- Si l'identité de l'individu est validée, annoter l'individu avec cette identité et le transférer dans un groupe d'individus annotés (308).

2. Procédé d'annotation de pistes selon la revendication 1 comprenant en outre une étape de recevoir une base de données (BDA) constituée de pistes de suivi d'individus annotés, le calcul de signature d'individu et l'algorithme de partitionnement étant réalisés pour les pistes de suivi d'individu annotés et inconnus, chaque groupe d'individus recommandés (309) comprenant un individu annoté.

3. Procédé d'annotation de pistes selon la revendication 2 dans lequel l'étape de validation (105) consiste à valider l'identité des individus classés dans le groupe d'individus recommandés (309) comme correspondant à l'identité de l'individu annoté.

4. Procédé d'annotation de pistes selon la revendication 3 dans lequel l'étape de validation (105) de l'identité des individus classés dans le groupe d'individus recommandés (309) est réalisée au moyen d'une interaction utilisateur ou au moyen d'une règle de comparaison entre les signatures respectives de l'individu dont l'identité doit être validée et de l'individu annoté.

5. Procédé d'annotation de pistes selon l'une quelconque des revendications 2 à 4 comprenant une étape de compléter la base de données (BDA) avec les pistes de suivi du groupe d'individus annotés (308).

6. Procédé d'annotation de pistes selon l'une quelconque des revendications précédentes dans lequel l'au moins une séquence d'images est acquise au moyen de plusieurs caméras à champs joints ou à champs disjoints.

7. Procédé d'annotation de pistes selon l'une quelconque des revendications précédentes dans lequel les pistes de suivi d'individu sont générées en 2D ou en 3D.

8. Procédé d'annotation de pistes selon l'une quelconque des revendications précédentes dans lequel l'étape de calculer (103) une signature pour chaque piste de suivi d'individu est réalisée au moyen d'un réseau neuronal de ré-identification entraîné pour générer des signatures semblables pour des individus identiques.

9. Procédé d'annotation de pistes selon la revendication 8 comprenant en outre une étape de ré-entraînement du réseau neuronal de ré-identification à partir de la base de données (BDA) de pistes de suivi d'individus obtenue à

EP 4 390 876 A1

l'issue de plusieurs itérations du procédé d'annotation.

10. Procédé d'annotation de pistes selon l'une quelconque des revendications précédentes comprenant en outre une étape de réception de contraintes fournies par au moins un capteur et associées aux pistes de suivi d'individus parmi lesquelles : une contrainte de localisation temporelle et/ou spatiale d'un individu, une contrainte relative à l'identité de l'individu, une contrainte de non ubiquité d'un individu, une contrainte de non téléportation d'un individu, lesdites contraintes étant fournies en entrée de l'algorithme de partitionnement sous contraintes.

11. Procédé d'annotation de pistes selon l'une quelconque des revendications précédentes comprenant en outre, à chaque itération, une étape de réception de contraintes utilisateurs associées aux pistes de suivi d'individus, relatives à l'identité d'un individu, lesdites contraintes étant fournies en entrée de l'algorithme de partitionnement sous contraintes.

12. Procédé d'annotation de pistes selon l'une quelconque des revendications précédentes dans lequel les contraintes de l'algorithme de partitionnement sont prises parmi une contrainte d'association entre plusieurs pistes de suivi d'individus ou une contrainte de non association entre plusieurs pistes de suivi d'individus.

13. Procédé d'annotation de pistes selon la revendication 12 dans lequel l'ensemble des pistes de suivi qui partagent une contrainte d'association sont regroupées dans le même groupe d'individus recommandés.

14. Procédé d'annotation de pistes selon la revendication 12 dans lequel deux pistes de suivi qui partagent une contrainte de non association sont placées dans deux groupes d'individus différents.

15. Programme d'ordinateur comportant des instructions pour l'exécution du procédé selon l'une quelconque des revendications 1 à 14, lorsque le programme est exécuté par un processeur.

16. Support d'enregistrement lisible par un processeur sur lequel est enregistré un programme comportant des instructions pour l'exécution du procédé selon l'une quelconque des revendications 1 à 14, lorsque le programme est exécuté par un processeur.

FIG.1a

```
                    ┌──────────────────────┐
                    │   Réception images   │────  101
                    └──────────────────────┘
                              │
                              ▼
                    ┌──────────────────────┐
                    │   Extraction pistes  │────  102
                    └──────────────────────┘
                              │
                              ▼
iter=k'; iter=0     ┌ ─ ─ ─ ─ ─ ─ ─ ─ ─ ─ ─┐
──────────────────  │     Entrainement     │
                    │   ré identification  │────  106
                    └ ─ ─ ─ ─ ─ ─ ─ ─ ─ ─ ─┘
                              │
       ┌───┐   iter=0         ▼
       │BDA│──────────▶┌──────────────────────┐
       └───┘           │   Calcul signatures  │────  103      CT
                       └──────────────────────┘              │
                              │                       ┌──────────────┐
                              ▼                       │              │
                    ┌──────────────────────┐◀─────────│  Contraintes │
         iter≠0     │   Partitionnement    │──── 104   └──────────────┘
        ──────────▶ └──────────────────────┘
                              │
                              ▼
                    ┌──────────────────────┐
                    │      Validation      │────  105
                    └──────────────────────┘
```

FIG.1b

ID 447

FIG.2

Signatures

Données capteur     Données utilisateur

Génération contraintes — 301

Contraintes capteurs     Contraintes utilisateur

Type ?

ML_Id     CL_Track

ML_Track     CL_Id

302    303    304    305    306

| Annotation BDA | Association entre piste et donnée annotée | Association entre piste | Non association entre piste et donnée annotée | Non association entre piste |

{Signature, label$_{VT}$}

ML    CL

Partitionnement — 307

{Signature, label$_{VT}$, label$_{PRED}$}

Type ?

label$_{VT}$ ≠ Nul     label$_{VT}$ == Nul     label$_{VT}$ == Nul

label$_{PRED}$ ∈ IDs connus     label$_{PRED}$ ∉ IDs connus

309

308 — Groupe « individus annotés »     Groupe « individus recommandés »     Groupe « individus sans identité » — 310

Interface utilisateur — 311

FIG.3

FIG.4

EP 4 390 876 A1

| | |
|---|---|
| 🟆 | annoté |
| ◎ | non annoté |
| ● | recommandé |
| ◇ | inconnu |

FIG.5a

| | | | |
|---|---|---|---|
| 🟆 | annoté | ◆——▶ | Contrainte d'association |
| ◎ | non annoté | ◆———◆ | Contrainte de non association |
| ● | recommandé | | |
| ◇ | inconnu | | FIG.5b |

annoté

non annoté

recommandé

inconnu

FIG.5c

501
505
502

⬡ annoté     ◆———◆ Contrainte d'association

◉ non annoté     ◆———◆ Contrainte de non association

● recommandé

◇ inconnu

FIG.5d

G1
G3
G2

⬡ annoté

◉ non annoté

● recommandé

◇ inconnu

FIG.5e

Europäisches
Patentamt

European
Patent Office

Office européen
des brevets

**RAPPORT DE RECHERCHE EUROPEENNE**

Numéro de la demande

**EP 23 21 8206**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/140386 A1 (YU TING [US] ET AL) 19 mai 2016 (2016-05-19) <br> * alinéa [0005] * <br> * alinéa [0014] * <br> * alinéa [0016] * <br> * alinéa [0017] * <br> * alinéa [0019] * <br> * alinéa [0030] - alinéa [0032] * <br> * alinéa [0023] - alinéa [0026]; figure 4 * <br> * alinéa [0021] * <br> ----- | 1-16 | INV. <br> G06V20/52 <br> G06F18/232 <br> G06F18/231 <br> G06F18/24 |
| X | TING YU ET AL: "Learning to recognize people in a smart environment", ADVANCED VIDEO AND SIGNAL-BASED SURVEILLANCE (AVSS), 2011 8TH IEEE INTERNATIONAL CONFERENCE ON, IEEE, 30 août 2011 (2011-08-30), pages 379-384, XP032053778, DOI: 10.1109/AVSS.2011.6027354 ISBN: 978-1-4577-0844-2 * le document en entier * ----- | 1-16 | |
| A | RONG YAN ET AL: "A Discriminative Learning Framework with Pairwise Constraints for Video Object Classification", IEEE TRANSACTIONS ON PATTERN ANALYSIS AND MACHINE INTELLIGENCE, IEEE COMPUTER SOCIETY, USA, vol. 28, no. 4, 1 avril 2006 (2006-04-01), pages 578-593, XP001523369, ISSN: 0162-8828, DOI: 10.1109/TPAMI.2006.65 * le document en entier * ----- <br><br> -/-- | 1-16 | **DOMAINES TECHNIQUES RECHERCHES (IPC)** <br><br> G06V <br> G06F |

Le présent rapport a été établi pour toutes les revendications

| Lieu de la recherche | Date d'achèvement de la recherche | Examinateur |
|---|---|---|
| **La Haye** | **22 avril 2024** | **Ionescu, Tudor** |

EPO FORM 1503 03.82 (P04C02)

page 1 de 2

**RAPPORT DE RECHERCHE EUROPEENNE**

Numéro de la demande

**EP 23 21 8206**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2014/226861 A1 (ZHANG TONG [US] ET AL) 14 août 2014 (2014-08-14) * le document en entier * ----- | 1-16 | |
| A | PÉREZ-ESCUDERO ALFONSO ET AL: "idTracker: tracking individuals in a group by automatic identification of unmarked animals", NATURE METHODS , vol. 11, no. 7 1 juin 2014 (2014-06-01), pages 743-748, XP093051910, New York ISSN: 1548-7091, DOI: 10.1038/nmeth.2994 Extrait de l'Internet: URL:http://www.nature.com/articles/nmeth.2994 [extrait le 2023-06-05] * le document en entier * ----- | 1-16 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 22 avril 2024 | Ionescu, Tudor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

# EP 4 390 876 A1

## ANNEXE AU RAPPORT DE RECHERCHE EUROPEENNE
## RELATIF A LA DEMANDE DE BREVET EUROPEEN NO.

EP 23 21 8206

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-04-2024

| Document brevet cité au rapport de recherche | Date de publication | Membre(s) de la famille de brevet(s) | Date de publication |
|---|---|---|---|
| US 2016140386 A1 | 19-05-2016 | EP 2786313 A1 | 08-10-2014 |
| | | US 2013136298 A1 | 30-05-2013 |
| | | US 2016140386 A1 | 19-05-2016 |
| | | WO 2013081750 A1 | 06-06-2013 |
| US 2014226861 A1 | 14-08-2014 | CN 104025117 A | 03-09-2014 |
| | | US 2014226861 A1 | 14-08-2014 |
| | | WO 2013063736 A1 | 10-05-2013 |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. BEWLEY ; G. ZONGYUAN ; F. RAMOS ; B. UP-CROFT.** Simple online and realtime tracking. *IEEE international conférence on image processing (ICIP),* 2016, 3464-3468
- **N. WOJKE ; A. BEWLEY ; D. PAULUS.** Simple on-line and realtime tracking with a deep association metric. *2017 IEEE international conférence on image processing (ICIP),* 2017, 3645-3649
- Bytetrack: Multi-object tracking by associating every détection box. **Y. ZHANG ; P.SUN ; Y. JIANG et al.** European Conférence on Computer Vision. Springer, 2022, 1-21
- **H. LUO ; Y. GU ; LIAO, XINGYU et al.** Bag of tricks and a strong baseline for deep person re-identification. *Proceedings of the IEEE/CVF conférence on computer vision and pattern recognition workshops,* 2019, 0-0
- **TRANSREID HE ; SHUTING, LUO ; HAO, WANG ; PICHAO et al.** Transreid: Transformer-based object re-identification. *Proceedings of the IEEE/CVF international conférence on computer vision,* 2021, 15013-15022
- C-dbscan: Density-based clustering with constraints. **RUIZ, CARLOS ; SPILIOPOULOU, MYRA ; MENA-SALVAS, ERNESTINA.** International workshop on rough sets, fuzzy sets, data mining, and granular-soft computing. Springer, 2007, 216-223
- Agglomerative hierarchical clustering with constraints: Theoretical and empirical results. **DAVID-SON, LAN ; RAVI, S. S.** European Conference on Principles of Data Mining and Knowledge Discovery. Springer, 2005, 59-70